(19) Europäisches Patentamt
European Patent Office
Office européen des brevets

(11) Veröffentlichungsnummer : **0 401 678 B1**

# (12) EUROPÄISCHE PATENTSCHRIFT

(45) Veröffentlichungstag der Patentschrift :
**04.08.93 Patentblatt 93/31**

(51) Int. Cl.$^5$ : **A01N 47/36,** A01N 47/34, A01N 47/30

(21) Anmeldenummer : **90110330.9**

(22) Anmeldetag : **31.05.90**

## (54) Herbizide Mittel.

(30) Priorität : **05.06.89 DE 3918287**

(43) Veröffentlichungstag der Anmeldung :
**12.12.90 Patentblatt 90/50**

(45) Bekanntmachung des Hinweises auf die Patenterteilung :
**04.08.93 Patentblatt 93/31**

(84) Benannte Vertragsstaaten :
**AT BE CH DE DK ES FR GB GR IT LI NL SE**

(56) Entgegenhaltungen :
**EP-A- 0 131 258**
**EP-A- 0 298 901**

(73) Patentinhaber : **HOECHST AKTIENGESELLSCHAFT**
**W-6230 Frankfurt am Main 80 (DE)**

(72) Erfinder : **Schumacher, Hans, Dr.**
**Claudiusstrasse 4**
**W-6093 Flörsheim am Main (DE)**
Erfinder : **Huff, Hans Philipp, Dr.**
**Eberlestrasse 18**
**W-6239 Eppstein/Taunus (DE)**
Erfinder : **Hacker, Erwin, Dr.**
**Margarethenstrasse 16**
**W-6203 Hochheim am Main (DE)**

EP 0 401 678 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind herbizide Mittel, die gekennzeichnet sind durch einen Gehalt an 3-(4,6-Dimethoxy-2-pyrimidinyl)-1-](N-methyl-N-methylsulfonyl)aminosulfonyl]-harnstoff der Formel

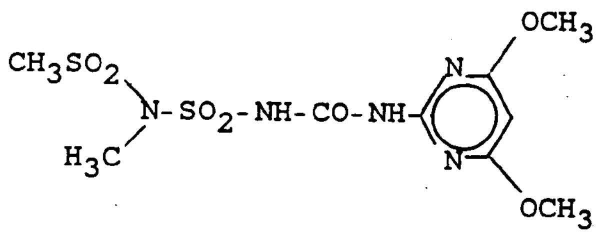

(I)

in Kombination mit einem Herbizid aus der Klasse der Phenylharnstoffe (II). Typische Phenylharnstoffderivate der Formel II sind z. B. Isoproturon (IIa), Monolinuron (IIb), Linuron, Chlortoluron, Diuron, Neburon und Methabenzthiazuron. Sie sind ausnahmslos beschrieben in "Pesticide Manual", 7. Auflage 1983 oder 8. Auflage 1987, The British Crop Protection Council, London. Wirkstoff I ist bekannt aus EP-A 131 258 (US-A 4,601,747).

Gegenstand der Anmeldung sind auch Dreierkombinationen des Wirkstoffs I mit jeweils zwei Phenylharnstoffderivaten. Überraschenderweise zeigen die beanspruchten Wirkstoffkombinationen eine synergistische Wirksamkeit, die aufgrund der Wirkung der Einzelkomponenten nicht zu erwarten war.

Die erfindungsgemäßen Wirkstoffkombinationen erfassen ein breites Spektrum ein- und mehrjhähriger Unkräuter. Sie eignen sich beispielsweise zur Bekämpfung von Chenopodium album (Melde), Sinapis sp. (Ackersenf), Stellaria media (Sternmiere), Capsella bursa pastoris (Hirtentäschelkraut), Alopecurus myosuroides (Ackerfuchsschwanz), Apera spica venti (Windhalm) usw. Aufgrund ihrer Unschädlichkeit gegenüber Nutzpflanzen lassen sie sich in zahlreichen Nutzpflanzenkulturen, z. B. in Getreide wie Weizen und Gerste im Vor- und Nachauflauf sowie in Kartoffeln und Mais im Vorauflauf einsetzen.

Das Mischungsverhältnis der Wirkstoffe I und II kann in weiten Grenzen schwanken und liegt in der Regel zwischen 1 : 10 und 1 : 400. Die Wahl des Mischungsverhältnisses ist abhängig von verschiedenen Parametern wie z. B. der Art des Mischungspartners II, dem Entwicklungsstadium der Unkräuter und des Unkrautspektrums. Vorzugsweise wählt man Mischungsverhältnisse zwischen 1 : 20 und 1 : 300. Die Aufwandmengen der erfindungsgemäßen Wirkstoffmischungen liegen in der Regel zwischen 0,06 und 4 kg/ha, vorzugsweise zwischen 0,1 und 4 kg/ha. Die Aufwandmengen der erfindungsgemäßen Wirkstoffmischungen liegen bei Freilandapplikationen in der Regel zwischen 0,4 und 4,0 kg/ha.

Die erfindungsgemäßen Mittel können in den üblichen, dem Fachmann geläufigen Zubereitungen, z. B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Falkenberg, "Pesticides Formulations", Marcel Dekker N.Y., 2nd Ed. 1972-73; K. Martens, "Spray Drying Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marschen, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Benetzbare Pulver sind in Wasser gleichmäßig dispergierbare Präparate, die neben dem Wirkstoff außer

einem Verdünnungsoder Inertstoff noch Netzmittel, z.B. polyoxyethylierte Alkylphenole, polyoxethylierte Fettalkohole oder polyoxethylierte Fettamine, Alkansulfonate oder Alkylbenzolsulfonate und Dispergiermittel, z.B. ligninsulfonsaures Natrium, 2,2′-dinaphthylmethan-6,6′-disulfonsaures Natrium, dinaphthylmethandisulfonsaures Natrium, dibutylnaphthyl-sulfonsaures Natrium oder auch oleylmethyltaurinsaures Natrium enthalten.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze, wie Ca-dodecylbenzolsulfonat, oder nichtionische Emulgatoren wie Fettsäurepolyglykolester, Alkylarylpolyglykolether, wie polyoxethylierte Alkylphenole, Fettalkoholpolyglykolether, Propylenoxid-Ethylenoxid-Kondensationsprodukte, Alkylpolyether, polyethoxylierte Fettamine, wie polyethoxyliertes Oleyl- oder Stearylamin, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Boden- bzw. Streugranulat können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt die Wirkstoffkonzentration etwa 10 % bis 80 %. Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Im allgemeinen liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zübereitungen, Boden- bzw. Streugranulate sowie versprühbare Lösungen werden vor der Anwendung üblicherweise nicht mehr mit weiteren inerten Stoffen verdünnt.

Die erfindungsgemäßen Kombinationen der Wirkstoffe I und II können im Vorauflauf- oder im Nachauflaufverfahren angewendet werden. Dabei werden die Wirkstoffe I und II einzeln nacheinander oder gemeinsam auf die Pflanzen oder deren Anbaufläche aufgebracht. Bevorzugt ist die Anwendung im Nachauflaufverfahren.

Mit den äußeren Bedingungen wie Temperatur, Feuchtigkeit, der Art des verwendeten Herbizids, u.a. variiert die erforderliche Aufwandmenge der Verbindungen der Formel (I).

Auch Mischungen oder Mischformulierungen mit anderen Wirkstoffen, wie z.B. Insektiziden, Akariziden, Herbiziden, Düngemitteln, Wachstumsregulatoren oder Fungiziden sind gegebenenfalls möglich.

Folgende Beispiele dienen zur Erläuterung der Erfindung:

**A. Formulierungsbeispiele**

a) Ein Stäubemittel wird erhalten, indem man 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltiges Quarz als Inertstoff, 10 Gewichtsteile ligninsulfonsaures Kalium und 1 Gewichtsteil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z. B. ca. 255 bis 377°C) mischt und in einer Reibkugelmkühle auf eine Feinheit von unter 5 Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

e) Ein in Wasser dispergierbares Granulat wird erhalten, indem man

| | | |
|---|---|---|
| 75 | Gewichtsteile | Wirkstoffgemisch, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | | |
|---|---|---|
| 25 | Gewichtsteile | Wirkstoffgemisch, |
| 5 | " | 2,2'-dinaphthylmethan-6,6'-disulfonsaures Natrium |
| 2 | " | oleolymethyltaurinsaures Natrium, |
| 1 | " | Polyvinylalkohol, |
| 17 | " | Calciumcarbonat und |
| 50 | " | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

g) Ein Extruder-Granulat erhält man, indem man 20 Gewichtsteile Wirkstoffgemisch, 3 Gewichtsteile ligininsulfonsaures Natrium, 1 Gewichtsteil Carboxymethylcellulose und 76 Gewichtsteile Kaolin vermischt, vermahlt und mit Wasser anfeuchtet. Dieses Gemisch wird extrudiert und anschließend in Luftstrom getrocknet.

**B. Biologische Beispiele**

In den folgenden Anwendungsbeispielen wurden die Testpflanzen im Gewächshaus in Töpfen angezogen.

Die Applikation der in Wasser verdünnten Konzentrate erfolgte, nachdem die monokotylen Pflanzen Apera spica venti, Triticum aestivum und Hordeum vulgare das 3 - 4 Blattstadium erreicht hatten und die dikotylen Pflanzen Chenopodium album und Sinapis arvensis bis 5 - 10 cm gewachsen waren.

Nach 4 Wochen wurde die Wirkung (Schädigung) bonitiert. In den nachfolgenden Tabellen sind die Versuchsergebnisse wiedergegeben.

Der Nachweis des Synergismus ergibt sich aus dem Vergleich des aus den Wirkungen der Einzelkomponenten errechneten additiven Wirkungsgrade mit dem experimentell gefundenen Wirkungsgrad der Wirkstoffkombinationen.

Die Errechnung des additiven Wirkungsgrads erfolgt nach der Formel von S.R. Colby (vgl. Calculating synergistic and antagonistic responses of herbicide combinations, Weeds, 15, 1967, S. 20 bis 22).

Die Formel lautet

$$E = X + Y - \frac{X \times Y}{100}$$

wobei

X = % Schädigung durch Herbizid (I) bei X kg/ha Aufwandmenge;

Y = % Schädigung durch Herbizid (II) bei Y kg/ha Aufwandmenge;

E = die zu erwartende Schädigung durch die Herbizide I + II bei X + Y kg/ha Aufwandmenge

bedeuten.

Ist die tatsächliche Schädigung größer als berechnet, so ist die Wirkung der Wirkstoffkombination mehr als additiv, d. h. es liegt ein synergistischer Effekt vor. Dies wird anhand der biologischen Beispiele der nachfolgenden Tabellen demonstriert, wobei in der rechten Spalte hinter den Ergebnissen der Kombinationsbehandlungen in Klammern die aus obiger Formel errechneten additiven Wirkungen angegeben sind.

**Tabelle 1**

| Wirkstoff | Dosis g AS/ha | Schädigung in % bei Chenopodium album | Sinapis arvense | Apera spica venti | Triticum aestivum | Hordeum vulgare |
|---|---|---|---|---|---|---|
| I | 3 | 15 | 30 | 0 | 0 | 0 |
| | 4,5 | 20 | 35 | 0 | 0 | 0 |
| | 6 | 25 | 40 | 0 | 0 | 0 |
| | 9 | 30 | 65 | 10 | 0 | 0 |
| | 12 | 35 | 90 | 25 | 0 | 0 |
| IIa | 120 | 0 | 10 | 15 | 0 | 0 |
| | 180 | 0 | 15 | 25 | 0 | 0 |
| | 240 | 20 | 18 | 40 | 0 | 0 |
| | 360 | 40 | 35 | 60 | 0 | 0 |
| | 720 | 75 | 60 | 90 | 0 | 0 |
| IIb | 60 | 0 | 0 | 10 | 0 | 0 |
| | 90 | 0 | 10 | 15 | 0 | 0 |
| | 120 | 15 | 15 | 25 | 0 | 0 |
| | 180 | 25 | 25 | 40 | 0 | 0 |
| | 240 | 30 | 35 | 50 | 0 | 0 |
| | 600 | 80 | 90 | 80 | 0 | 0 |

Tabelle 2

| Wirkstoff | Dosis g AS/ha | Chenopodium album | Sinapis arvense | Apera spica venti | Triticum aestivum | Hordeum vulgare |
|---|---|---|---|---|---|---|
| I + IIa | 6 +120 | 35 (25) | 60 (46) | 25 (15) | 0 | 0 |
| | 9 +180 | 46 (30) | 85 (71) | 45 (33) | 0 | 0 |
| | 12 +240 | 65 (48) | 100 (92) | 70 (55) | 0 | 0 |
| | 3 +120 | 25 (15) | 50 (37) | 20 (15) | 0 | 0 |
| | 4,5 +180 | 40 (20) | 60 (45) | 35 (25) | 0 | 0 |
| | 3 +240 | 40 (32) | 60 (43) | 45 (40) | 0 | 0 |
| | 4,5 +360 | 65 (52) | 80 (58) | 75 (60) | 0 | 0 |
| | 3 +360 | 60 (49) | 68 (55) | 70 (60) | 0 | 0 |
| | 3 +720 | 100 (79) | 100 (72) | 95 (90) | 0 | 0 |
| I + IIb | 6 +60 | 35 (25) | 50 (40) | 30 (10) | 0 | 0 |
| | 9 +90 | 45 (30) | 85 (69) | 40 (24) | 0 | 0 |
| | 12 +120 | 60 (45) | 100 (92) | 65 (44) | 0 | 0 |
| | 3 +60 | 25 (15) | 40 (30) | 25 (10) | 0 | 0 |
| | 4,5 +90 | 35 (20) | 65 (42) | 38 (15) | 0 | 0 |
| | 6 +120 | 50 (37) | 80 (49) | 60 (25) | 0 | 0 |
| | 3 +120 | 45 (28) | 45 (41) | 55 (25) | 0 | 0 |
| | 4,5 +180 | 55 (40) | 75 (52) | 70 (40) | 0 | 0 |
| | 6 +240 | 70 (48) | 95 (61) | 85 (50) | 0 | 0 |
| | 3 +240 | 60 (41) | 80 (55) | 80 (50) | 0 | 0 |
| | 3 +600 | 100 (83) | 100 (93) | 90 (80) | 0 | 0 |

## Patentansprüche

1. Herbizide Mittel, gekennzeichnet durch einen Gehalt an 3-(4,6-Dimethoxy-2-pyrimidinyl)-1-[(N-methyl-N-methylsulfonyl)aminosulfonyl]-harnstoff der Formel

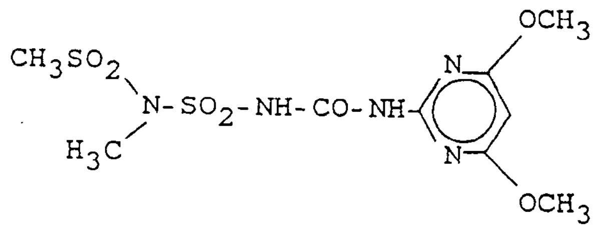

(I)

in Kombination mit einem Herbizid aus der Klasse der Phenylharnstoffe (II).

2. Herbizide Mittel gemäß Anspruch 1, dadurch gekennzeichnet, daß sie als Phenylharnstoff (II) Isoproturon enthalten.

3. Herbizide Mittel gemäß Anspruch 1, dadurch gekennzeichnet, daß sie als Phenylharnstoff (II) Monolinuron enthalten.

4. Herbizide Mittel gemäß Anspruch 1, dadurch gekennzeichnet, daß sie mehrere Phenylharnstoffe (II) in Kombination mit der Verbindung I enthalten.

5. Herbizide Mittel gemäß einem oder mehreren der Ansprüche 1 bis 4, dadurch gekennzeichnet, daß sie die Wirkstoffe I und II im Gewichtsverhältnis zwischen 1 : 10 und 1 : 400 enthalten.

6. Herbizide Mittel nach einem oder mehreren der Ansprüche 1 bis 5, dadurch gekennzeichnet, daß sie 2-95 Gew.-% Wirkstoffgemisch und 98-5 Gew.-% übliche Formulierungshilfsmittel für Zübereitungen aus der Gruppe der benetzbaren Pulver, Stäubemittel, Granulate oder versprühbaren Lösungen enthalten.

7. Verfahren zur Unkrautbekämpfung, dadurch gekennzeichnet, daß man auf die zu behandelnden Flächen eine wirksame Menge einer synergistischen Mischung bestehend aus I und II aufbringt.

8. Verfahren gemäß Anspruch 7, dadurch gekennzeichnet, daß die synergistische Mischung die Wirkstoffe I und II im Gewichtsverhältnis zwischen 1 : 10 und 1 : 400 enthält.

9. Verfahren gemäß Anspruch 7 oder 8, dadurch gekennzeichnet, daß man die synergistische Mischung in einer Aufwandmenge von 0,06 bis 4,0 kg/ha aufbringt.

10. Verwendung einer Kombination der Verbindungen der Formel I oder II zur Unkrautbekämpfung.

## Claims

1. A herbicidal agent which contains 3-(4,6-dimethoxy-2 -pyrimidinyl)-1-[(N-ethyl-N-methylsulfonyl) a sulfonyl]-urea of the formula

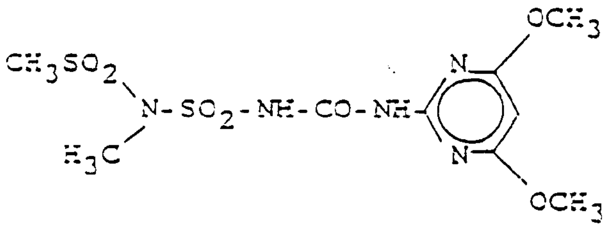

(I)

in combination with a herbicide from the class of phenylureas (II).

2. A herbicidal agent as claimed in claim 1, which contains isoproturon as the phenylurea (II).

3. A herbicidal agent as claimed in claim 1, which contains monolinuron as the phenylurea (II).

4. A herbicidal agent as claimed in claim 1, which contains several phenylureas (II) in combination with the compound I.

5. A herbicidal agent as claimed in any one of claims 1 to 4, which contains the active compounds I and II in a weight ratio of between 1:10 and 1:400.

6. A herbicidal agent as claimed in any one of claims 1 to 5, which contains 2-95% by weight of active compound mixture and 98-5% by weight of customary formulation auxiliaries for preparations from the group comprising wettable powders, dusting agents, granules or sprayable solutions.

7. A method of controlling weeds, which comprises applying an effective amount of a synergistic mixture consisting of I and II to the areas to be treated.

8. A method as claimed in claim 7, wherein the synergistic mixture contains the active compounds I and II in a weight ratio of between 1:10 and 1:400.

9. The method as claimed in either of claims 7 and 8, wherein the synergistic mixture is applied in an application amount of 0.06 to 4.0 kg/ha.

10. The use of a combination of the compounds of the formula I or II for controlling weeds.

## Revendications

1. Produits herbicides caractérisés en ce qu'ils comprennent de la 3-(4,6-diméthoxy-2-pyrimidinyl)-1-[(N-méthyl-N-méthyl-sulfonyl)-aminosulfonyl]urée de formule :

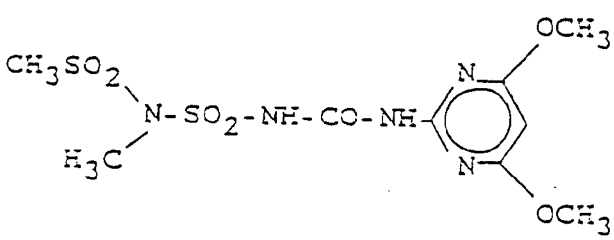

(I)

associée à un herbicide de la catégorie des phénylurées (II).

2. Herbicides selon la revendication 1, caractérisés en ce qu'ils comprennent de l'isoproturon comme phénylurée (II)

3. Herbicides selon la revendication 1, caractérisés en ce qu'ils comprennent du monolinuron comme phénylurée (II).

4. Herbicides selon la revendication 1, caractérisés en ce qu'ils comprennent plusieurs phénylurées (II) associées au composé de formule I.

5. Herbicides selon une ou plusieurs des revendications 1 à 4, caractérisés en ce qu'ils contiennent les matières actives I et II dans un rapport pondéral compris entre 1:10 et 1:400.

6. Herbicides selon une ou plusieurs des revendications 1 à 5, caractérisés en ce qu'ils contiennent de 2 à 95% en poids du mélange de matières actives et de 98 à 5% d'auxiliaires de formulation courants pour des préparations du groupe des poudres mouillables pour pulvérisations, produits d'épandage, granulés et solutions pulvérisables.

7. Procédé de lutte contre des mauvaises herbes, caractérisé en ce que l'on applique sur les surfaces à traiter une quantité appropriée d'un mélange à effet de synergie formé des composés I et II.

8. Procédé selon la revendication 7, caractérisé en ce que le mélange de synergie des matières actives I et II contient ces matières dans un rapport pondéral compris entre 1:10 et 1:400.

9. Procédé selon la revendication 7 ou 8, caractérisé en ce que l'on applique le mélange de synergie à un taux de 0,06 à 4,0 kg à l'hectare.

10. Emploi d'une association des composés I et II pour lutter contre des mauvaises herbes.